# EUROPEAN PATENT SPECIFICATION

(11) **EP 4 496 170 B1**
(45) Date of publication and mention of the grant of the patent: **16.09.2026**
(21) Application number: 23770068.7
(22) Date of filing: 11.01.2023
(51) Int. Cl.: H02J 7/00, H02J 7/52, B60L 3/00, B60L 50/60, B60L 53/80, B60L 58/21, H02J 7/02, B60L 3/12, B60L 53/31, B60L 53/53, H01M 10/48, H01M 10/42, H01M 10/44

(54) **POWER SUPPLY SYSTEM, ELECTRIC MOVING BODY, CHARGER, AND ENERGIZATION CONFIRMATION METHOD**
STROMVERSORGUNGSSYSTEM, BEWEGLICHER ELEKTRISCHER KÖRPER, LADEGERÄT UND BESTROMUNGSBESTÄTIGUNGSVERFAHREN
SYSTÈME D'ALIMENTATION ÉLECTRIQUE, CORPS MOBILE ÉLECTRIQUE, CHARGEUR ET PROCÉDÉ DE CONFIRMATION D'EXCITATION

(30) Priority: 16.03.2022 JP 2022041252
(43) Date of publication of application: 22.01.2025
(73) Proprietor: Panasonic Intellectual Property Management Co., Ltd., Kadoma-shi, Osaka 571-0057 (JP)
(72) Inventor: OHMORI, Chikara, Kadoma-shi, Osaka 571-0057 (JP)
(74) Representative: Novagraaf International SA
(86) International application number: PCT/JP2023/000429
(87) International publication number: WO 2023/176104

(56) References cited:
- WO-A1-2015/041249
- WO-A1-2022/024836
- JP-A- 2016 019 412
- JP-A- 2016 019 412
- JP-A- 2017 005 939
- JP-A- 2021 534 553
- US-A1- 2012 079 710
- US-A1- 2013 063 094
- US-A1- 2016 233 560
- US-A1- 2020 355 746
- US-B2- 9 041 243

## Description

### Technical Field

The present disclosure relates to a power supply system including a plurality of power storage packs connected in parallel, an electric moving body, a charger, and an energization confirmation method.

### Background Art

In recent years, electric motorcycles (electric scooters), electric bicycles, and the like have become popular. Generally, portable battery packs that are attachable/detachable are used in the electric motorcycles, the electric bicycles, and the like. In order to increase the capacity of power systems, there has been an increasing need for connecting battery packs in parallel. Meanwhile, battery swap type EVs have also been developed. For battery swap type ultra-compact EVs, portable battery packs for use in electric motorcycles, electric bicycles, and the like can be used, and battery packs used by EVs can also be reused for power storage systems.

In a power supply system in which portable battery packs are mounted on a mounting slot at a vehicle and connected in parallel, there are cases, depending on how the portable battery packs are mounted, where a loose connection of a power line occurs while a signal line is properly connected. In this case, the vehicle determines that all the battery packs are properly connected because the signal line is properly connected, and determines an allowable current value on the basis of the number of connected battery packs including a battery pack loosely connected to the power line. This may cause an electric current exceeding the allowable current value of a battery pack unit to flow to the battery pack unit and cause damage to the battery pack. JP 2016 019412 A discloses a charger comprising:a charging stand configured to charge a plurality of power storage packs connected in parallel, each of the plurality of power storage packs being attachable to and detachable from the charging stand and, when attached to the charging stand, each being electrically connected in parallel with respect to a load, at respective merging points to a power line according to the state of the art. US 2016/233560 A1 discloses plurality of power storage packs, wherein each pack includes:a power storage module configured to be connected to a load by a power line; a switch configured to turn ON and OFF energization between the power storage module and a diagnosis module; a voltage measurement unit configured to measure a voltage across both ends of the switch and the power storage module connected in series; and a control unit configured to obtain the voltage measured by the voltage measurement unit and to control the switch,a plurality of control units respectively included in the plurality of power storage packs configured as connected by a signal line.

Conceivable methods for detecting whether a battery pack is connected to a system body includes a method in which voltages inside and outside a relay (a relay for switching a power line between energization and de-energization) in a battery pack are measured and when the difference between these voltages is greater than or equal to a predetermined voltage value, it is determined that there is a loose connection (for example, refer to Patent Literature (PTL) 1).

### Citation List

### Patent Literature

PTL 1: Unexamined Japanese Patent Publication No. 2017-005939
PTL 2: Japanese Patent Application JP 2017 005939 A
PTL 3: United States Patent Application US 2020/355746 A1

### Summary of Invention

However, in the aforementioned method, if battery packs with substantially the same voltage differences are connected in parallel, the occurrence of a loose connection does not result in a significant voltage difference between these, meaning that the accuracy of detecting a loose connection of a battery pack is not necessarily high. Furthermore, when there are significant voltage variations between battery packs connected in parallel and an electric current (cross current) flows from a battery pack to another, it requires time to finalize the measured voltage, which may lead to increased detection time.

Other conceivable methods include a method for physically detecting a battery pack being mounted by referring to opening or closing of a lid and a method for magnetically detecting a battery pack and a mounting slot approaching each other. None of these methods offers reliable energization confirmation of a power line; thus, there remains a risk of erroneous determination.

The present disclosure is conceived in view of this situation and has an object to provide a technique to accurately confirm the energization state of a power line for each power storage pack in a system in which a plurality of power storage packs are connected in parallel.

In order to solve the above problem, a power supply system according to one aspect of the present disclosure includes a plurality of power storage packs connected in parallel with respect to a load. Each of the power storage packs includes: a power storage module; a switch that turns ON and OFF energization between the power storage module and the load; a voltage measurement unit that measures a voltage across both ends of the switch and the power storage module connected in series; and a control unit that obtains the voltage measured by the voltage measurement unit and is configured to control the switch. A plurality of control units respectively included in the plurality of power storage packs are connected by a signal line, the switch in one power storage pack is turned ON when a plurality of switches respectively included in the plurality of power storage packs are OFF, when all of a plurality of voltages respectively measured by a plurality of the voltage measurement units in all of the plurality of power storage packs including the switch that has been turned ON indicate energization, it is determined that a current state is normal, and when a voltage indicating energization is measured by the voltage measurement unit in the one power storage pack including the switch that has been turned ON and a voltage indicating de-energization is measured by the voltage measurement unit in a power storage pack other than the one power storage pack including the switch that has been turned ON, it is determined that there is an anomaly in a power line for a power storage pack included in the plurality of power storage packs.

Note that an arbitrary combination of the structural elements described above and those obtained by converting the expressions described in the present disclosure into devices, systems, methods, computer programs, and the like are also effective as embodiments of the present disclosure.

According to the present disclosure, in a system in which a plurality of power storage packs are connected in parallel, the energization state of a power line for each power storage pack can be accurately confirmed. Hereafter "embodiment(s)" relate to embodiment(s) of the present disclosure. The invention is defined in the appended claims.

### Brief Description of Drawings

[Fig. 1] Fig. 1 is an example configuration of an electric motor vehicle according to an exemplary embodiment.
[Fig. 2] Fig. 2 is a diagram for describing one example of an energization confirmation sequence for battery packs.
[Fig. 3] Fig. 3 is a diagram illustrating a table compiling the results of determination of an energization confirmation sequence for battery packs.
[Fig. 4A] Fig. 4A is a diagram for describing another specific example of an energization confirmation sequence for battery packs.
[Fig. 4B] Fig. 4B is a diagram for describing another specific example of an energization confirmation sequence for battery packs.
[Fig. 5] Fig. 5 is an example configuration of a charger according to an exemplary embodiment.

### Description of Embodiments

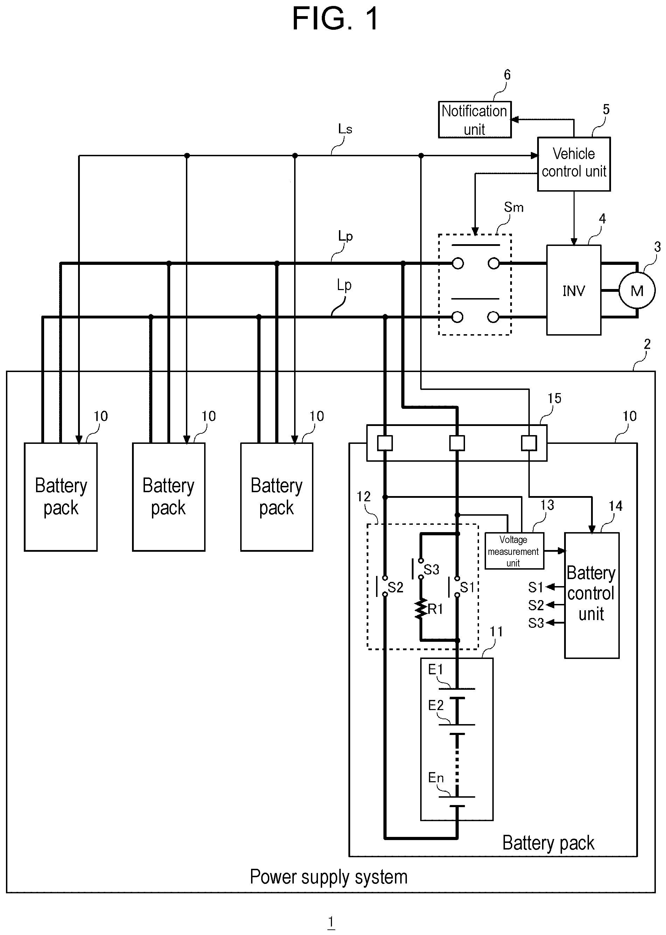

Fig. 1 is an example configuration of electric motor vehicle 1 according to an exemplary embodiment. Hereinafter, the exemplary embodiment assumes that electric motor vehicle 1 is an electric motorcycle. Electric motor vehicle 1 includes power supply system 2, motor 3, inverter 4, vehicle control unit 5, and notification unit 6 as main structural elements. Power supply system 2 includes a mounting slot in which a plurality of (in Fig. 1, four) battery packs 10 are mounted. Note that in an application in which there is a demand for increased capacity such as compact EVs, five or more parallel mounting slots may be provided. In an application in which there is a demand for lighter weight such as electric bicycles, two or three parallel mounting slots may be provided.

Inverter 4 converts direct-current power supplied from power supply system 2 into alternating-current power and supplies the alternating-current power to motor 3 during power running. During regeneration, the alternating-current power supplied from motor 3 is converted into direct-current power and supplied to power supply system 2. Motor 3, which is a three-phase alternating-current motor, rotates according to the alternating-current power supplied from inverter 4 during power running. During regeneration, rotational energy generated as a result of a reduction in speed is converted into alternating-current power and supplied to inverter 4.

The direct-current end of inverter 4 is connected to power supply system 2 by power line Lp. On power line Lp, main switch Sm is connected between inverter 4 and merging points of the plurality of battery packs 10. A relay, a semiconductor switch (for example, a metal oxide semiconductor field effect transistor (MOSFET), or the like can be used as main switch Sm. Vehicle control unit 5 is a vehicle electronic control unit (ECU) that controls entire electric motor vehicle 1. Vehicle control unit 5 can be configured from a microcontroller and non-volatile memory (for example, electrically erasable programmable read-only memory (EEPROM) or flash memory), for example. Notification unit 6, which is a user interface, includes at least one of a light-emitting diode (LED) lamp, a meter panel, a display, a speaker, and the like, for example.

Battery pack 10, which is portable/swappable battery pack 10 that is attachable/detachable, includes battery module 11, switch unit 12, voltage measurement unit 13, battery control unit 14, and connector 15. A user or a maintenance worker mounts battery pack 10 on power supply system 2 by fitting connector 15 of battery pack 10 into the mounting slot of power supply system 2. In the example illustrated in Fig. 1, connector 15 includes a positive power supply terminal, a negative power supply terminal, and a signal terminal.

Battery module 11 includes a plurality of cells E1 to En connected in series. Note that battery module 11 may be configured by connecting, in series, a plurality of parallel cell blocks including a plurality of cells connected in parallel. As the cells, lithium-ion battery cells, nickel-hydrogen battery cells, lead battery cells, or the like can be used. The following example herein assumes that lithium-ion battery cells (with a nominal voltage of 3.6 V to 3.7 V) are used. The number of cells connected in series is determined according to a drive voltage for motor 3.

First switch S1 is connected between a positive end power supply terminal of connector 15 and a positive end terminal of battery module 11, and second switch S2 is connected between a negative end power supply terminal of connector 15 and a negative end terminal of battery module 11. A precharge circuit is connected in parallel with first switch S1. The precharge circuit includes resistor R1 and third switch S3 connected in series. The precharge circuit is provided in order to limit an inrush current with resistor R1 at the start of energization. Relays, semiconductor switches, and the like can be used as first switch S1 to third switch S3. First switch S1 to third switch S3 and resistor R1 are collectively referred to herein as switch unit 12. Switch unit 12 functions as a switch that turns ON and OFF the energization between battery module 11 and a load (that is inverter 4 and motor 3 in Fig. 1).

Voltage measurement unit 13 measures a voltage across both ends of switch unit 12 and battery module 11 connected in series 12, and outputs the voltage to battery control unit 14. Voltage measurement unit 13 includes a voltage-dividing resistor, a differential amplifier, and an A/D converter, for example.

Battery control unit 14 controls entire battery pack 10. Battery control unit 14 can be configured from a microcontroller and non-volatile memory, for example. The plurality of battery control units 14 respectively included in the plurality of battery packs 10 and vehicle control unit 5 are connected by signal line Ls. The plurality of battery control units 14 and vehicle control unit 5 can perform serial communication with each other by using a controller area network (CAN) protocol, for example.

Battery control unit 14 obtains a voltage of battery module 11 including switch unit 12 that has been measured by voltage measurement unit 13. Battery control unit 14 controls switch unit 12. Upon powering on electric motor vehicle 1, for example, battery control unit 14 turns ON third switch S3 first while controlling first switch S1 and second switch S2 to the OFF state. In this state, an electric current flows from battery module 11 toward the vehicle via resistor R1. When a predetermined time has passed since battery control unit 14 turned ON third switch S3, battery control unit 14 turns ON first switch S1 and second switch S2 and turns OFF third switch S3. This enables a soft start.

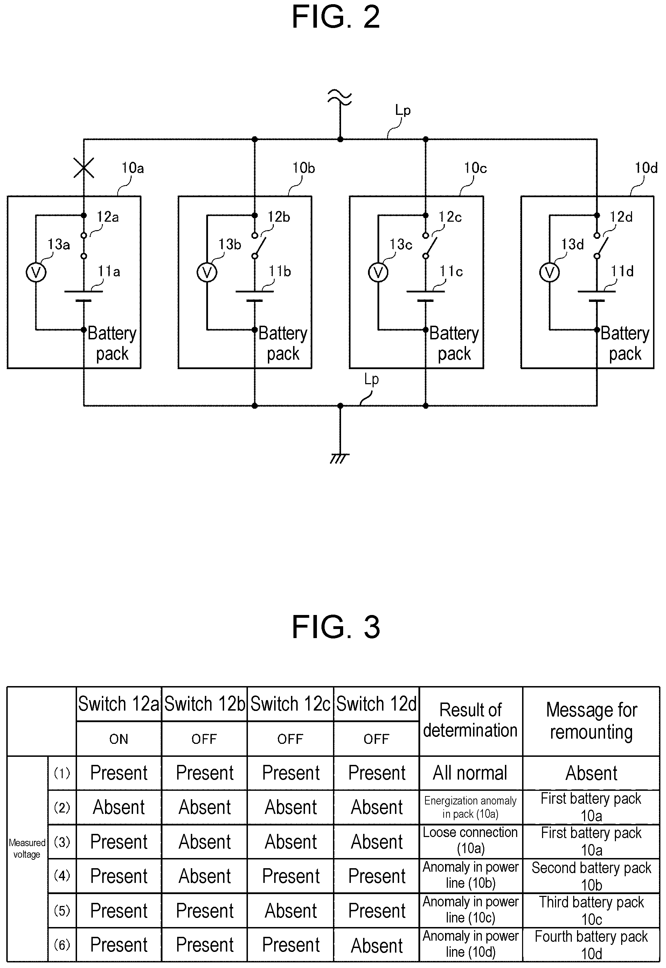

Fig. 2 is a diagram for describing one example of an energization confirmation sequence for battery packs 10. The energization confirmation sequence may be performed every time electric motor vehicle 1 is powered on or may be performed when battery pack 10 is mounted in one of the mounting slots of power supply system 2.

In the state where the plurality of switch units 12 respectively included in the plurality of battery packs 10 are OFF, battery control unit 14 in one battery pack 10 turns ON switch unit 12 included in said battery pack 10. Fig. 2 illustrates an example where first battery control unit 14a in first battery pack 10a turns ON first switch unit 12a.

When a user of electric motor vehicle 1 performs an operation to power on electric motor vehicle 1, vehicle control unit 5 transmits an energization confirmation mode signal including a turn-on instruction for first switch unit 12a to first battery control unit 14a in first battery pack 10a via signal line Ls, and transmits energization confirmation mode signals including turn-off instructions for second switch unit 12b to fourth switch unit 12d to second battery control unit 14b to fourth battery control unit 14d in second battery pack 10b to fourth battery pack 10d. A channel for battery pack 10 to which vehicle control unit 5 transmits the turn-on signal may be always the same or may be regularly changed.

Furthermore, as triggered by battery pack 10 being detected to have been mounted in the mounting slot of power supply system 2, vehicle control unit 5 may transmit the energization confirmation mode signal including the turn-on instruction to first battery control unit 14a in first battery pack 10a, and transmit the energization confirmation mode signals including the turn-off instructions to second battery control unit 14b to fourth battery control unit 14d in second battery pack 10b to fourth battery pack 10d.

When battery pack 10 is removed and mounted during activation of electric motor vehicle 1, vehicle control unit 5 can detect, from disconnection and energization of signal line Ls, whether battery pack 10 has been removed and mounted. When battery pack 10 is removed and mounted during shut-down of electric motor vehicle 1, vehicle control unit 5 can detect, on the basis of the battery pack ID and the state of charge (SOC) received from battery pack 10 mounted, whether battery pack 10 has been removed and mounted during shut-down. For example, when the battery pack ID before shut-down and the battery pack ID after the shut-down are different, vehicle control unit 5 determines that battery pack 10 has been replaced with another one. Furthermore, for example, when the battery pack ID is the same and the SOC before shut-down is greater than the SOC after the shut-down, vehicle control unit 5 determines that battery pack 10 has been removed once for charging and then mounted.

At the time when a user or a maintenance worker attaches connector 15 of battery pack 10 to the mounting slot, there are cases where the signal terminal inside connector 15 is properly connected to the signal terminal of the mounting slot, but at least one of the positive and negative power supply terminals inside connector 15 is loosely connected to the corresponding power terminal of the mounting slot. A loose connection of power line Lp occurs when a user or a maintenance worker fails to mount battery pack 10 at the exact fitting position on the mounting slot. The loose connection also occurs due to breakage, corrosion, wear, etc., of the power supply terminal.

When receiving the energization confirmation mode signal including the turn-on instruction from vehicle control unit 5, first battery control unit 14a in first battery pack 10a turns ON first switch unit 12a and after first switch unit 12a is turned ON, obtains a voltage from first voltage measurement unit 13a. First battery control unit 14a transmits the obtained voltage to vehicle control unit 5 via signal line Ls.

When receiving the energization confirmation mode signal including the turn-off instruction from vehicle control unit 5, second battery control unit 14b to fourth battery control unit 14d in second battery pack 10b to fourth battery pack 10d confirm that second switch unit 12b to fourth switch unit 12d are OFF and after the confirmation, obtain voltages from second voltage measurement unit 13b to fourth voltage measurement unit 13d. Second battery control unit 14b to fourth battery control unit 14d transmit the obtained voltages to vehicle control unit 5 via signal line Ls.

Fig. 3 is a diagram illustrating a table compiling the results of determination of the energization confirmation sequence for battery packs 10. When one of first switch unit 12a to fourth switch unit 12d in a predetermined battery pack among first battery pack 10a to fourth battery pack 10d is turned ON and all of the plurality of voltages respectively measured by first voltage measurement unit 13a to fourth voltage measurement unit 13d in first battery pack 10a to fourth battery pack 10d indicate energization, vehicle control unit 5 determines that the energization of all battery packs 10a to 10d is normal (pattern 1).

When all of the plurality of voltages respectively measured by first voltage measurement unit 13a to fourth voltage measurement unit 13d in first battery pack 10a to fourth battery pack 10d indicate de-energization (0 V), vehicle control unit 5 determines that there is an energization anomaly in first battery pack 10a (pattern 2). In this case, it is considered that there is an anomaly such as disconnection of power line Lp in first battery pack 10a or an open-circuit fault of first switch unit 12a.

Vehicle control unit 5 provides, from notification unit 6, a message that prompts remounting of first battery pack 10a. Vehicle control unit 5 turns ON an LED lamp for remounting notifications, for example. For example, a plurality of LED lamps corresponding to the number and positions of mounting slots for battery packs may be provided so that vehicle control unit 5 turns ON an LED lamp corresponding to a mounting slot in which remounting of the battery pack is required. Vehicle control unit 5 may, for example, cause the display to show a text message that reads "please remount the battery pack at the far left end." Vehicle control unit 5 may, for example, cause the speaker to output a voice message that reads "please remount the battery pack at the far left end," or output an alert sound. Other possible means of notifications for users includes the flashing cycle, etc., of an LED and a display on each battery pack 10 that shows an error code.

When a user or a maintenance worker remounts first battery pack 10a in the mounting slot, vehicle control unit 5 performs the above-described energization confirmation sequence again. When the voltages measured by first voltage measurement unit 13a to fourth voltage measurement unit 13d do not change (when pattern 2 remains unchanged), the determination of anomalous energization in first battery pack 10a is finalized. Vehicle control unit 5 provides, from notification unit 6, a message that prompts repair or replacement of first battery pack 10a. Furthermore, vehicle control unit 5 reduces the upper limit value of an electric current that is output from inverter 4 to motor 3 to an upper limit value corresponding to the number of battery packs in parallel, excluding first battery pack 10a. In the example illustrated in Fig. 2, vehicle control unit 5 changes the upper limit value of the electric current that is output from inverter 4 to motor 3 to three-fourths of the upper limit value applied when the energization of all four battery packs 10 in parallel is normal. Moreover, vehicle control unit 5 also reduces the upper limit value of an electric current that is regenerated from motor 3 to inverter 4 to an upper limit value corresponding to the number of battery packs in parallel, excluding first battery pack 10a.

When the voltage measured by first voltage measurement unit 13a in first battery pack 10a indicates energization and the plurality of voltages measured by second voltage measurement unit 13b to fourth voltage measurement unit 13d in second battery pack 10b to fourth battery pack 10d indicate de-energization, vehicle control unit 5 determines that there is a loose connection between first battery pack 10a and power supply system 2 (pattern 3). In this case, it is considered that at least one of the positive and negative power supply terminals inside connector 15 of first battery pack 10a is loosely connected to the corresponding power supply terminal of the mounting slot of power supply system 2. The loose connection between battery pack 10 and power supply system 2 and the energization anomaly in battery pack 10 are collectively referred to herein as an anomaly in power line Lp for battery pack 10.

Vehicle control unit 5 provides, from notification unit 6, a message that prompts remounting of first battery pack 10a. When a user or a maintenance worker remounts first battery pack 10a in the mounting slot, vehicle control unit 5 performs the above-described energization confirmation sequence again. When the cause is misaligned fitting of connector 15 and as a result of remounting, the misaligned fitting is solved so that an energizing path is properly formed, all of the plurality of voltages respectively measured by first voltage measurement unit 13a to fourth voltage measurement unit 13d change to energization (pattern 1).

When there is irreversible damage such as breakage of a power supply terminal, the voltages measured by first voltage measurement unit 13a to fourth voltage measurement unit 13d do not change and pattern 3 remains unchanged. When the voltages measured by first voltage measurement unit 13a to fourth voltage measurement unit 13d do not change (when pattern 3 remains unchanged), vehicle control unit 5 determines that there is an irreversible loose connection of first battery pack 10a. Vehicle control unit 5 provides, from notification unit 6, a message that prompts repair or replacement of first battery pack 10a. Furthermore, vehicle control unit 5 reduces the upper limit value of an electric current that is output from inverter 4 to motor 3 to an upper limit value corresponding to the number of battery packs in parallel, excluding first battery pack 10a. Moreover, vehicle control unit 5 also reduces the upper limit value of an electric current that is regenerated from motor 3 to inverter 4 to an upper limit value corresponding to the number of battery packs in parallel, excluding first battery pack 10a.

When the voltages respectively measured by first voltage measurement unit 13a, third voltage measurement unit 13c, and fourth voltage measurement unit 13d in first battery pack 10a, third battery pack 10c, and fourth battery pack 10d indicate energization and the voltage measured by second voltage measurement unit 13b in second battery pack 10b indicates de-energization, vehicle control unit 5 determines that there is an anomaly in power line Lp for second battery pack 10b (pattern 4). Whether the disconnected area is inside second battery pack 10b or at the connector part cannot be identified at this stage.

Vehicle control unit 5 provides, from notification unit 6, a message that prompts remounting of second battery pack 10b. When a user or a maintenance worker remounts second battery pack 10b in the mounting slot, vehicle control unit 5 performs the above-described energization confirmation sequence again. When the cause is misaligned fitting of connector 15 and as a result of remounting, the misaligned fitting is solved, all of the plurality of voltages respectively measured by first voltage measurement unit 13a to fourth voltage measurement unit 13d change to energization (pattern 1).

When the cause is another irreversible anomaly in power line Lp, the voltages respectively measured by first voltage measurement unit 13a to fourth voltage measurement unit 13d do not change and pattern 4 remains unchanged. When the voltages measured by first voltage measurement unit 13a to fourth voltage measurement unit 13d do not change (when pattern 4 remains unchanged), vehicle control unit 5 finalizes the determination of anomaly occurrence in power line Lp for second battery pack 10b. Vehicle control unit 5 provides, from notification unit 6, a message that prompts repair or replacement of second battery pack 10b. Furthermore, vehicle control unit 5 reduces the upper limit value of an electric current that is output from inverter 4 to motor 3 to an upper limit value corresponding to the number of battery packs in parallel, excluding second battery pack 10b. Moreover, vehicle control unit 5 also reduces the upper limit value of an electric current that is regenerated from motor 3 to inverter 4 to an upper limit value corresponding to the number of battery packs in parallel, excluding second battery pack 10b.

Note that vehicle control unit 5 may transmit the energization confirmation mode signal including the turn-on instruction to second battery control unit 14b in second battery pack 10b, transmit the energization confirmation mode signals including the turn-off instructions to first battery control unit 14a, third battery control unit 14c, and fourth battery control unit 14d in first battery pack 10a, third battery pack 10c, and fourth battery pack 10d, and perform the energization confirmation sequence again. When the voltage measured by second voltage measurement unit 13b indicates energization, vehicle control unit 5 determines that there is an irreversible loose connection between second battery pack 10b and power supply system 2, and when the voltage measured by second voltage measurement unit 13b indicates de-energization, vehicle control unit 5 determines that there is an energization anomaly in second battery pack 10b.

When the voltages respectively measured by first voltage measurement unit 13a, second voltage measurement unit 13b, and fourth voltage measurement unit 13d in first battery pack 10a, second battery pack 10b, and fourth battery pack 10d indicate energization and the voltage measured by third voltage measurement unit 13c in third battery pack 10c indicates de-energization, vehicle control unit 5 determines that there is an anomaly in power line Lp for third battery pack 10c (pattern 5). The subsequent processes are substantially the same as the processes in pattern 4 with second battery pack 10b replaced by third battery pack 10c.

When the voltages respectively measured by first voltage measurement unit 13a to third voltage measurement unit 13c in first battery pack 10a to third battery pack 10c indicate energization and the voltage measured by fourth voltage measurement unit 13c in fourth battery pack 10d indicates de-energization, vehicle control unit 5 determines that there is an anomaly in power line Lp for fourth battery pack 10d (pattern 6). The subsequent processes are substantially the same as the processes in pattern 4 with second battery pack 10b replaced by fourth battery pack 10d.

The example illustrated in Fig. 2 shows a situation where there is an irreversible loose connection between first battery pack 10a and power supply system 2; when a user or a maintenance worker remounts first battery pack 10a in the mounting slot, the loose connection between first battery pack 10a and power supply system 2 is solved.

The example illustrated in Fig. 2, which explains about power supply system 2 for four battery packs 10 in parallel, is adaptable for three or more battery packs 10 in parallel. When there are two battery packs 10 in parallel, namely, first battery pack 10a and second battery pack 10b, turning ON switch unit 12 in one of battery packs 10 does not enable finalization of the determination of pattern 3 and pattern 4 indicated in Fig. 3. Therefore, vehicle control unit 5 provides, from notification unit 6, a message that prompts remounting of first battery pack 10a and second battery pack 10b.

In a situation where the determination of pattern 3 and pattern 4 cannot be finalized, similar to the example illustrated in Fig. 2, when a user or a maintenance worker remounts first battery pack 10a and second battery pack 10b in the mounting slots, vehicle control unit 5 performs the energization confirmation sequence again and when the remounting solves the misaligned fitting of first battery pack 10a and second battery pack 10b so that energizing paths are formed, all of the plurality of voltages respectively measured by first voltage measurement unit 13a and second voltage measurement unit 13b change to energization (pattern 1), and both first battery pack 10a and second battery pack 10b are determined as being normal.

In a situation where the determination of pattern 3 and pattern 4 cannot be finalized, second switch unit 12b in second battery pack 10b, which is the other of the battery packs that is different from first battery pack 10a which is one of the battery packs that includes first switch unit 12a that has been turned ON, switches to ON and voltage measurement unit 13b in second battery 10b measures a voltage and when the voltage measured by voltage measurement unit 13b in second battery 10b indicates energization, it may be determined that there is an anomaly in power line Lp for first battery 10a, and when the voltage measured by voltage measurement unit 13b in second power storage pack 10b indicates de-energization, it may be determined that there is an anomaly in power line Lp for second battery10b.

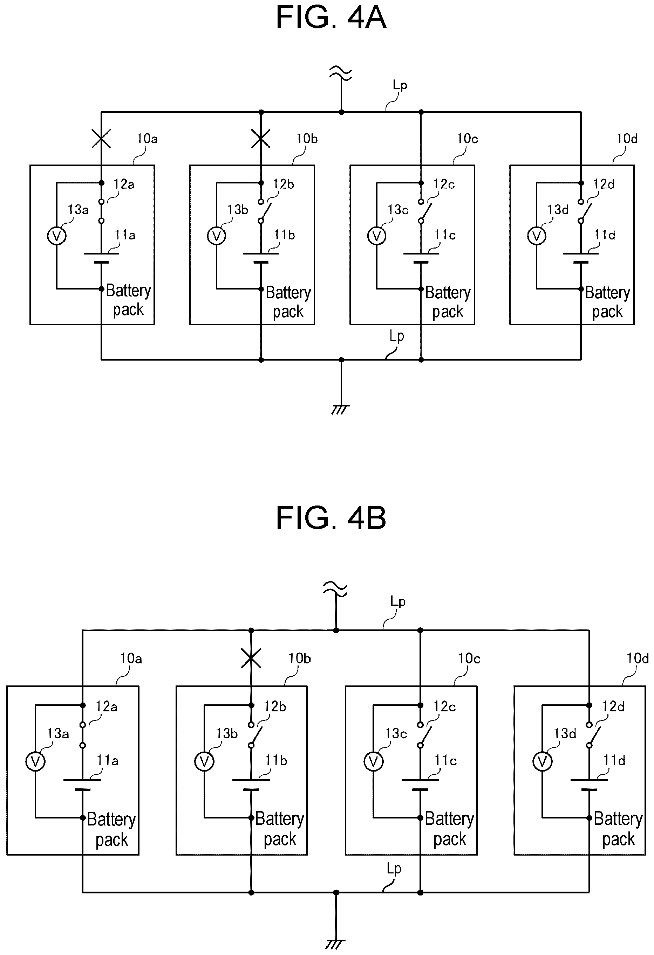

Figs. 4A, 4B are diagrams for describing other specific examples of the energization confirmation sequence for battery packs 10. The example illustrated in Fig. 4A shows a situation where there are irreversible loose connections at two locations that are between first battery pack 10a and power supply system 2 and between second battery pack 10b and power supply system 2.

Vehicle control unit 5 transmits the energization confirmation mode signal including the turn-on instruction to first battery control unit 14a in first battery pack 10a, transmits the energization confirmation mode signals including the turn-off instructions to second battery control unit 14a to fourth battery control unit 14d in second battery pack 10b to fourth battery pack 10d, and performs the energization confirmation sequence. In the state illustrated in Fig. 4A, the result is as follows: the voltage measured by first voltage measurement unit 13a in first battery pack 10a indicates energization and the plurality of voltages respectively measured by second voltage measurement unit 13b to fourth voltage measurement unit 13d in second battery pack 10b to fourth battery pack 10d indicate de-energization, and vehicle control unit 5 determines that there is a loose connection between first battery pack 10a and power supply system 2 (pattern 3).

Vehicle control unit 5 provides, from notification unit 6, a message that prompts remounting of first battery pack 10a. When a user or a maintenance worker remounts first battery pack 10a in the mounting slot, the loose connection between first battery pack 10a and power supply system 2 is solved, as illustrated in Fig. 4B.

Vehicle control unit 5 performs the above-described energization confirmation sequence again. The result is as follows: the voltages respectively measured by first voltage measurement unit 13a, third voltage measurement unit 13c, and fourth voltage measurement unit 13d in first battery pack 10a, third battery pack 10c, and fourth battery pack 10d indicate energization and the voltage measured by second voltage measurement unit 13b in second battery pack 10b indicates de-energization, and vehicle control unit 5 determines that there is an anomaly in power line Lp for second battery pack 10b (pattern 4).

Vehicle control unit 5 provides, from notification unit 6, a message that prompts remounting of second battery pack 10b. When a user or a maintenance worker remounts second battery pack 10b in the mounting slot, the loose connection between second battery pack 10b and power supply system 2 is solved.

Vehicle control unit 5 performs the above-described energization confirmation sequence again. The result is as follows: all of the plurality of voltages respectively measured by first voltage measurement unit 13a to fourth voltage measurement unit 13d in first battery pack 10a to fourth battery pack 10d indicate energization, and vehicle control unit 5 determines that the energization of all battery packs 10a to 10d is normal (pattern 1).

Note that at the stage at which pattern 3 described above is detected, vehicle control unit 5 may skip issuing a message that prompts remounting and perform the energization confirmation sequence in which another switch unit 12 is turned ON. By performing more than one time the energization confirmation sequence in which different switch unit 12 is turned ON, vehicle control unit 5 can identify all battery packs 10 with an anomaly in power line Lp among the plurality of battery packs 10 mounted on power supply system 2. Vehicle control unit 5 provides, from notification unit 6, a message that prompts remounting of all battery packs 10 with an anomaly in power line Lp.

The foregoing has described an example where vehicle control unit 5 transmits the energization confirmation mode signals to first battery control unit 14a to fourth battery control unit 14d in first battery pack 10a to fourth battery pack 10d. In this regard, when a user or a maintenance worker mounts battery pack 10 in the mounting slot of power supply system 2, battery control unit 14 in said battery pack 10 (hereinafter referred to as mounted battery pack 10) may turn ON switch unit 12 in mounted battery pack 10 and transmit the energization confirmation mode signals including the turn-off instructions to battery control units 14 in other battery packs 10 connected by signal line Ls.

When receiving the energization confirmation mode signals including the turn-off instructions from battery control unit 14 in mounted battery pack 10, battery control units 14 in other battery packs 10 confirm that switch units 12 are OFF and after the confirmation, obtain voltages from voltage measurement units 13. Battery control units 14 in other battery packs 10 transmit the obtained voltages to battery control unit 14 in mounted battery pack 10 via signal line Ls.

On the basis of the plurality of voltages respectively measured by voltage measurement units 13 in the plurality of battery packs 10 connected to power supply system 2, battery control unit 14 in mounted battery pack 10 determines which one of patterns 1 to 3 described above corresponds to the current situation. When pattern 2 or 3 described above corresponds to the current situation, battery control unit 14 in mounted battery pack 10 transmits, to vehicle control unit 5, a request signal for requesting notification unit 6 to provide a message that prompts remounting of mounted battery pack 10. Note that when mounted battery pack 10 itself is equipped with an indicator lamp for remounting notifications, battery control unit 14 in mounted battery pack 10 may turn ON said indicator lamp.

Note that power supply system 2 may include a fixed master battery control unit that is physically independent of battery pack 10. The master battery control unit manages, via signal line Ls, battery pack 10 mounted in the mounting slot. The master battery control unit can perform the above-described energization confirmation sequence.

The above-described energization confirmation sequence can be applied to a charger capable of charging the plurality of battery packs 10 in parallel.

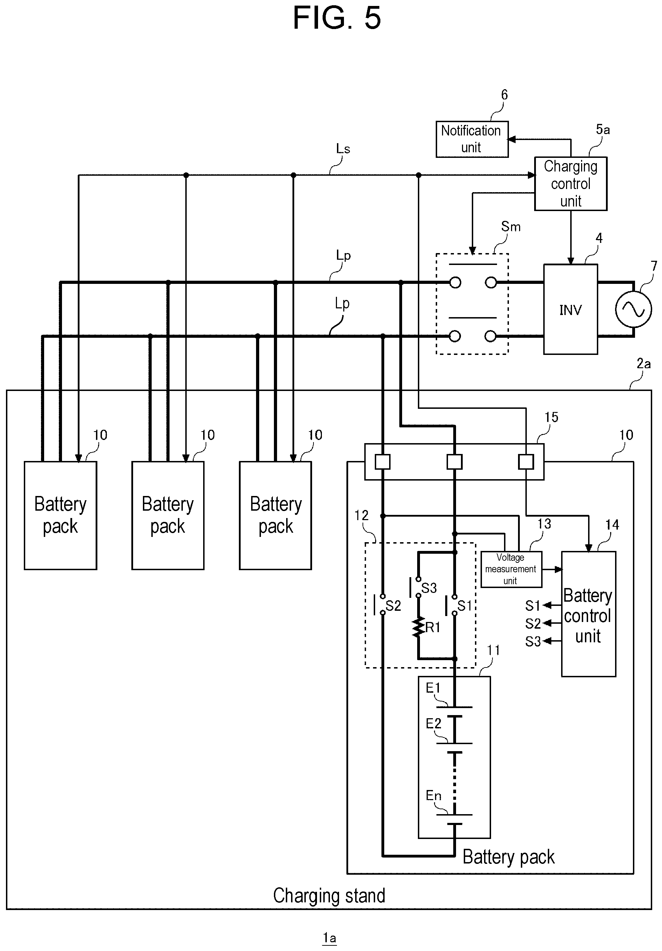

Fig. 5 is an example configuration of charger 1a according to an exemplary embodiment. Charger 1a includes charging stand 2a, inverter 4, charging control unit 5a, and notification unit 6. Charging stand 2a includes a plurality of slots in which the plurality of battery packs 10 can be stored in the state of being connected in parallel.

The alternating-current end of inverter 4 is connected to commercial power system 7; inverter 4 can convert, into direct-current power, alternating-current power supplied from commercial power system 7, to charge at least one battery pack 10 mounted on charging stand 2a. Inverter 4 may be configured to include a full-wave rectifier, a filter, and a DC/DC converter.

When detecting that battery pack 10 has been mounted in one of charging slots of charging stand 2a, charging control unit 5a transmits an energization confirmation mode signal including a turn-on instruction for first switch unit 12a to first battery control unit 14a in first battery pack 10a via signal line Ls, and transmits energization confirmation mode signals including turn-off instructions for second switch unit 12b to fourth switch unit 12d to second battery control unit 14b to fourth battery control unit 14d in second battery pack 10b to fourth battery pack 10d. The subsequent processes are substantially the same as those performed for electric motor vehicle 1 described above.

As described above, the energization state of power line Lp for each battery pack 10 mounted on power supply system 2 or charging stand 2a can be accurately confirmed according to the present exemplary embodiment. In the present exemplary embodiment, energization and de-energization are determined according to whether there is a voltage, and thus this detection method is reliable as compared to when a physical or magnetic sensor is used. Furthermore, in the present exemplary embodiment, even when there are voltage variations between the plurality of battery packs 10 connected in parallel, the number of switch units 12 to turn ON is one and therefore, no cross current is generated. Consequently, unnecessary power consumption due to a cross current is eliminated. Furthermore, there is no need to wait until the cross current ends in order to finalize the measured voltage value, meaning that the energization state can always be confirmed in the same measurement time.

The present disclosure has been described thus far based on the exemplary embodiment. The exemplary embodiment is merely an example; a person having ordinary skill in the art will readily appreciate that various variations are possible as a combination of these structural elements and these processes and that these variations are also included in the scope of the present disclosure.

The above exemplary embodiment has described an example in which battery pack 10 incorporating battery module 11 is used. In this regard, a capacitor pack incorporating a capacitor that includes an electric double layer capacitor cell, a lithium ion capacitor cell, or the like may be used. The battery pack and the capacitor pack are collectively referred herein to as a power storage pack.

The above exemplary embodiment assumes that the power storage pack is a portable/swappable power storage pack that is attachable/detachable. In this regard, the energization confirmation method according to the present disclosure can be applied to a power storage pack (to be charged with a charging cable) fixed to electric motor vehicle 1. For example, every time a user performs an operation to power ON electric motor vehicle 1, vehicle control unit 5 performs the above-described energization confirmation sequence. Vehicle control unit 5 can detect an anomaly in power line Lp for one of the plurality of power storage packs connected in parallel. In this example, when an anomaly is detected, vehicle control unit 5 does not provide a message that prompts remounting, but provides a message that prompts repair or replacement.

Power supply system 2 according to the exemplary embodiment that includes a plurality of power storage packs connected in parallel can also be used for an electric plurality of power storage packs connected in parallel can also be used for an electric moving body different from electric motor vehicle 1. Examples of the electric moving body include electric boats or ships. For example, power supply system 2 according to the exemplary embodiment can be mounted on a water bus, a water taxi, or the like. Other examples of the electric moving body include electric trains. For example, instead of diesel multiple units used on non-electrified routes, an electric train incorporating power supply system 2 according to the exemplary embodiment can be used. Examples of the electric moving body also include electric aerial vehicles. Electric aerial vehicles include a multirotor (a drone). The multirotor also includes what is called a flying car. Furthermore, the plurality of power storage packs according to the exemplary embodiment that are connected in parallel can also constitute a stationary power storage system.

### Reference Signs List

- 1: electric motor vehicle
- 1a: charger
- 2: power supply system
- 2a: charging stand
- 3: motor
- 4: inverter
- 5: vehicle control unit
- 5a: charging control unit
- 6: notification unit
- 7: commercial power system
- 10: battery pack
- 11: battery module
- 12: switch unit
- 13: voltage measurement unit
- 14: battery control unit
- 15: connector
- S1-S3: switch
- Sm: main switch
- E1-En: cell
- R1: resistor
- Lp: power line
- Ls: signal line

## Claims

1. A system comprising a charger (1a) and a plurality of power storage packs (10); the charger (1a) comprising:
a charging stand (2a) configured to charge a plurality of power storage packs (10) connected in parallel, each of the plurality of power storage packs (10) being attachable to and detachable from the charging stand (2a) and, when attached to the charging stand (2a), each being electrically connected in parallel with respect to a load (3), at respective merging points to a power line (Lp), wherein
each of the plurality of power storage packs (10) includes:
a power storage module (11);
the power storage module (11) and the load (7) configured as connected by the power line (Lp);
a switch (12) configured to turn ON and OFF energization between the power storage module (11) and the charger (1a);
a voltage measurement unit (13) configured to measure a voltage across both ends of the switch (12) and the power storage module (11) connected in series; and
a control unit (14) configured to obtain the voltage measured by the voltage measurement unit (13) and to control the switch (12),
a plurality of control units (14) respectively included in the plurality of power storage packs (10) configured as connected by a signal line (Ls),
the switch (12) in one power storage pack (10) being configured as turned ON when a plurality of switches (12) respectively included in the plurality of power storage packs (10) are OFF, for respective voltage measurement in each of the plurality of power storage packs (10),
when all of a plurality of voltages respectively measured by a plurality of the voltage measurement units (13) in all of the plurality of power storage packs (10) including the switch (12) that has been turned ON indicate energization, the control unit (14) is configured to determine that an energization state is normal in the power line (Lp),
when the voltage measured by the voltage measurement unit (13) in the one power storage pack (10) including the switch (12) that has been turned ON indicates de-energization and all of a plurality of voltages respectively measured by a plurality of the voltage measurement units (13) in all power storage packs (10) other than the one power storage pack (10) including the switch (12) that has been turned ON indicate de-energization, the control unit (14) is configured to determine that there is an energization anomaly in the one power storage pack (10) including the switch (12) that has been turned ON,
when the voltage measured by the voltage measurement unit (13) in the one power storage pack (10) including the switch (12) that has been turned ON indicates energization and all of the plurality of voltages respectively measured by the plurality of voltage measurement units (13) in all the power storage packs (10) other than the one power storage pack (10) including the switch (12) that has been turned ON indicate de-energization, the control unit (14) is configured to determine that there is a loose connection between the one power storage pack (10) including the switch (12) that has been turned ON and the charger (1a), and
when a voltage indicating de-energization is included in the plurality of voltages respectively measured by the plurality of voltage measurement units (13) in all the power storage packs (10) other than the one power storage pack (10) including the switch (12) that has been turned ON, the control unit (14) is configured to determine that there is an anomaly in the power line (Lp) for a power storage pack (10) in which the voltage indicating the de-energization has been measured.

2. The system according to claim 1, wherein
a user interface (6) is configured to provide a message that prompts remounting of the power storage pack (10) determined to include the anomaly in the power line (Lp).

3. The system according to claim 2, wherein
after the power storage pack (10) determined to include the anomaly in the power line (Lp) is remounted, the switch (12) in the one power storage pack (10) is turned ON.

4. An energization confirmation method to be performed on a plurality of power storage packs (10), each electrically connected in parallel with respect to a load (7), at respective merging points to a power line (Lp), wherein
each of the plurality of power storage packs (10) includes:
a power storage module (11);
a switch (12) that turns ON and OFF energization between the power storage module (11) and the load (7);
a voltage measurement unit (13) that measures a voltage across both ends of the switch (12) and the power storage module (11) connected in series; and
a control unit (14) that obtains the voltage measured by the voltage measurement unit (13) and is configured to control the switch (12),
a plurality of control units (14) respectively included in the plurality of power storage packs (10) are connected by a signal line (Ls), and
the energization confirmation method comprises:
turning ON the switch (12) in one power storage pack (10) when a plurality of switches (12) respectively included in the plurality of power storage packs (10) are OFF, for respective voltage measurement in each of the plurality of power storage packs (10);
when all of a plurality of voltages respectively measured by a plurality of the voltage measurement units (13) in all of the plurality of power storage packs (10) including the switch (12) that has been turned ON indicate energization, the control unit (14) determining that an energization state is normal in a power line (Lp); and
when the voltage measured by the voltage measurement unit (13) in the one power storage pack (10) including the switch (12) that has been turned ON indicates de-energization and all of a plurality of voltages respectively measured by a plurality of the voltage measurement units (13) in all power storage packs (10) other than the one power storage pack (10) including the switch (12) that has been turned ON indicate de-energization, the control unit (14) determining that there is an energization anomaly in the one power storage pack (10) including the switch (12) that has been turned ON; and
when a voltage indicating energization is measured by the voltage measurement unit (13) in the one power storage pack (10) including the switch (12) that has been turned ON and a voltage indicating de-energization is measured by the voltage measurement unit (13) in a power storage pack (10) other than the one power storage pack (10) including the switch (12) that has been turned ON, the control unit determining that there is an anomaly in a power line (Lp) for a power storage pack (10) included in the plurality of power storage packs (10); and
when a voltage indicating de-energization is included in the plurality of voltages respectively measured by the plurality of voltage measurement units (13) in all the power storage packs (10) other than the one power storage pack (10) including the switch (12) that has been turned ON, the control unit (14) determining that there is an anomaly in the power line (Lp) for a power storage pack (10) in which the voltage indicating the de-energization has been measured.

## Patentansprüche

1. System, umfassend ein Ladegerät (1a) und eine Mehrzahl von Energiespeicherpaketen (10); wobei das Ladegerät (1a) umfasst:
einen Ladeständer (2a), der dazu konfiguriert ist, eine Mehrzahl von parallel geschalteten Energiespeicherpaketen (10) zu laden, wobei jedes der Mehrzahl von Energiespeicherpaketen (10) an dem Ladeständer (2a) anbringbar und von diesem abnehmbar ist und, wenn es am Ladeständer (2a) angebracht ist, jedes elektrisch parallel in Bezug auf eine Last (3) an jeweiligen Zusammenführungspunkten zu einer Stromleitung (Lp) verbunden ist, wobei jedes der Mehrzahl von Energiespeicherpaketen (10) umfasst:
ein Energiespeichermodul (11);
wobei das Energiespeichermodul (11) und die Last (7) als durch die Stromleitung (Lp) verbunden konfiguriert sind;
einen Schalter (12), der dazu konfiguriert ist, die Energiezufuhr zwischen dem Energiespeichermodul (11) und dem Ladegerät (1a) EIN- und AUSzuschalten;
eine Spannungsmesseinheit (13), die dazu konfiguriert ist, eine Spannung an beiden Enden des Schalters (12) und des in Reihe geschalteten Energiespeichermoduls (11) zu messen; und eine Steuereinheit (14), die dazu konfiguriert ist, die von der Spannungsmesseinheit (13) gemessene Spannung zu erhalten und den Schalter (12) zu steuern,
wobei eine Mehrzahl von Steuereinheiten (14), die jeweils in der Mehrzahl von Energiespeicherpaketen (10) enthalten sind, als durch eine Signalleitung (Ls) verbunden konfiguriert sind,
wobei der Schalter (12) in einem Energiespeicherpaket (10) als EINgeschaltet konfiguriert ist, wenn eine Mehrzahl von Schaltern (12), die jeweils in der Mehrzahl von Energiespeicherpaketen (10) enthalten sind, AUS sind, zur jeweiligen Spannungsmessung in jedem der Mehrzahl von Energiespeicherpaketen (10),
wenn alle einer Mehrzahl von Spannungen, die jeweils von einer Mehrzahl der Spannungsmesseinheiten (13) in allen der Mehrzahl von Energiespeicherpaketen (10) einschließlich des Schalters (12), der EINgeschaltet wurde, gemessen werden, eine Energiezufuhr anzeigen, ist die Steuereinheit (14) dazu konfiguriert, zu bestimmen, dass ein Energiezufuhrzustand in der Stromleitung (Lp) normal ist,
wenn die von der Spannungsmesseinheit (13) in dem einen Energiespeicherpaket (10) einschließlich des Schalters (12), der EINgeschaltet wurde, gemessene Spannung eine Entenergiezufuhr anzeigt und alle einer Mehrzahl von Spannungen, die jeweils von einer Mehrzahl der Spannungsmesseinheiten (13) in allen Energiespeicherpaketen (10) außer dem einen Energiespeicherpaket (10) einschließlich des Schalters (12), der EINgeschaltet wurde, gemessen werden, eine Entenergiezufuhr anzeigen, ist die Steuereinheit (14) dazu konfiguriert, zu bestimmen, dass eine Energiezufuhranomalie in dem einen Energiespeicherpaket (10) einschließlich des Schalters (12), der EINgeschaltet wurde, vorliegt,
wenn die von der Spannungsmesseinheit (13) in dem einen Energiespeicherpaket (10) einschließlich des Schalters (12), der EINgeschaltet wurde, gemessene Spannung eine Energiezufuhr anzeigt und alle der Mehrzahl von Spannungen, die jeweils von der Mehrzahl von Spannungsmesseinheiten (13) in allen Energiespeicherpaketen (10) außer dem einen Energiespeicherpaket (10) einschließlich des Schalters (12), der EINgeschaltet wurde, gemessen werden, eine Entenergiezufuhr anzeigen, ist die Steuereinheit (14) dazu konfiguriert, zu bestimmen, dass eine lose Verbindung zwischen dem einen Energiespeicherpaket (10) einschließlich des Schalters (12), der EINgeschaltet wurde, und dem Ladegerät (1a) besteht, und
wenn eine Spannung, die eine Entenergiezufuhr anzeigt, in der Mehrzahl von Spannungen enthalten ist, die jeweils von der Mehrzahl von Spannungsmesseinheiten (13) in allen Energiespeicherpaketen (10) außer dem einen Energiespeicherpaket (10) einschließlich des Schalters (12), der EINgeschaltet wurde, gemessen werden, ist die Steuereinheit (14) dazu konfiguriert, zu bestimmen, dass eine Anomalie in der Stromleitung (Lp) für ein Energiespeicherpaket (10) vorliegt, in dem die die Entenergiezufuhr anzeigende Spannung gemessen wurde.

2. System nach Anspruch 1, wobei
eine Benutzerschnittstelle (6) dazu konfiguriert ist, eine Nachricht bereitzustellen, die zum erneuten Anbringen des Energiespeicherpakets (10), bei dem die Anomalie in der Stromleitung (Lp) festgestellt wurde, auffordert.

3. System nach Anspruch 2, wobei
nachdem das Energiespeicherpaket (10), bei dem die Anomalie in der Stromleitung (Lp) festgestellt wurde, erneut angebracht ist, der Schalter (12) in dem einen Energiespeicherpaket (10) EINgeschaltet wird.

4. Energiezufuhrbestätigungsverfahren, das an einer Mehrzahl von Energiespeicherpaketen (10) durchzuführen ist, die jeweils elektrisch parallel in Bezug auf eine Last (7) an jeweiligen Zusammenführungspunkten zu einer Stromleitung (Lp) verbunden sind, wobei jedes der Mehrzahl von Energiespeicherpaketen (10) umfasst:
ein Energiespeichermodul (11);
einen Schalter (12), der die Energiezufuhr zwischen dem Energiespeichermodul (11) und der Last (7) EIN- und AUSschaltet;
eine Spannungsmesseinheit (13), die eine Spannung an beiden Enden des Schalters (12) und des in Reihe geschalteten Energiespeichermoduls (11) misst; und
eine Steuereinheit (14), die die von der Spannungsmesseinheit (13) gemessene Spannung erhält und dazu konfiguriert ist, den Schalter (12) zu steuern,
wobei eine Mehrzahl von Steuereinheiten (14), die jeweils in der Mehrzahl von Energiespeicherpaketen (10) enthalten sind, durch eine Signalleitung (Ls) verbunden sind, und
wobei das Energiezufuhrbestätigungsverfahren umfasst:
EINschalten des Schalters (12) in einem Energiespeicherpaket (10), wenn eine Mehrzahl von Schaltern (12), die jeweils in der Mehrzahl von Energiespeicherpaketen (10) enthalten sind, AUS sind, zur jeweiligen Spannungsmessung in jedem der Mehrzahl von Energiespeicherpaketen (10);
wenn alle einer Mehrzahl von Spannungen, die jeweils von einer Mehrzahl der Spannungsmesseinheiten (13) in allen der Mehrzahl von Energiespeicherpaketen (10) einschließlich des Schalters (12), der EINgeschaltet wurde, gemessen werden, eine Energiezufuhr anzeigen, Bestimmen durch die Steuereinheit (14), dass ein Energiezufuhrzustand in einer Stromleitung (Lp) normal ist; und
wenn die von der Spannungsmesseinheit (13) in dem einen Energiespeicherpaket (10) einschließlich des Schalters (12), der EINgeschaltet wurde, gemessene Spannung eine Entenergiezufuhr anzeigt und alle einer Mehrzahl von Spannungen, die jeweils von einer Mehrzahl der Spannungsmesseinheiten (13) in allen Energiespeicherpaketen (10) außer dem einen Energiespeicherpaket (10) einschließlich des Schalters (12), der EINgeschaltet wurde, gemessen werden, eine Entenergiezufuhr anzeigen, Bestimmen durch die Steuereinheit (14), dass eine Energiezufuhranomalie in dem einen Energiespeicherpaket (10) einschließlich des Schalters (12), der EINgeschaltet wurde, vorliegt; und
wenn eine Spannung, die eine Energiezufuhr anzeigt, von der Spannungsmesseinheit (13) in dem einen Energiespeicherpaket (10) einschließlich des Schalters (12), der EINgeschaltet wurde, gemessen wird und eine Spannung, die eine Entenergiezufuhr anzeigt, von der Spannungsmesseinheit (13) in einem Energiespeicherpaket (10) außer dem einen Energiespeicherpaket (10) einschließlich des Schalters (12), der EINgeschaltet wurde, gemessen wird, Bestimmen durch die Steuereinheit, dass eine Anomalie in einer Stromleitung (Lp) für ein in der Mehrzahl von Energiespeicherpaketen (10) enthaltenes Energiespeicherpaket (10) vorliegt; und
wenn eine Spannung, die eine Entenergiezufuhr anzeigt, in der Mehrzahl von Spannungen enthalten ist, die jeweils von der Mehrzahl von Spannungsmesseinheiten (13) in allen Energiespeicherpaketen (10) außer dem einen Energiespeicherpaket (10) einschließlich des Schalters (12), der EINgeschaltet wurde, gemessen werden, Bestimmen durch die Steuereinheit (14), dass eine Anomalie in der Stromleitung (Lp) für ein Energiespeicherpaket (10) vorliegt, in dem die die Entenergiezufuhr anzeigende Spannung gemessen wurde.

## Revendications

1. Système comprenant un chargeur (1a) et une pluralité de blocs de stockage d'énergie (10) ; le chargeur (1a) comprenant :
un support de charge (2a) configuré pour charger une pluralité de blocs de stockage d'énergie (10) connectés en parallèle, chacun de la pluralité de blocs de stockage d'énergie (10) étant attachable au et détachable du support de charge (2a) et, lorsqu'il est attaché au support de charge (2a), chacun étant électriquement connecté en parallèle par rapport à une charge (3), à des points de fusion respectifs vers une ligne d'alimentation (Lp), dans lequel chacun de la pluralité de blocs de stockage d'énergie (10) comprend :
un module de stockage d'énergie (11) ;
le module de stockage d'énergie (11) et la charge (7) étant configurés comme étant connectés par la ligne d'alimentation (Lp) ;
un commutateur (12) configuré pour activer et désactiver l'énergisation entre le module de stockage d'énergie (11) et le chargeur (1a) ;
une unité de mesure de tension (13) configurée pour mesurer une tension aux deux extrémités du commutateur (12) et du module de stockage d'énergie (11) connectés en série ; et
une unité de commande (14) configurée pour obtenir la tension mesurée par l'unité de mesure de tension (13) et pour commander le commutateur (12),
une pluralité d'unités de commande (14) respectivement incluses dans la pluralité de blocs de stockage d'énergie (10) étant configurées comme étant connectées par une ligne de signal (Ls),
le commutateur (12) dans un bloc de stockage d'énergie (10) étant configuré comme étant activé lorsqu'une pluralité de commutateurs (12) respectivement inclus dans la pluralité de blocs de stockage d'énergie (10) sont désactivés, pour la mesure de tension respective dans chacun de la pluralité de blocs de stockage d'énergie (10),
lorsque la totalité d'une pluralité de tensions respectivement mesurées par une pluralité des unités de mesure de tension (13) dans la totalité de la pluralité de blocs de stockage d'énergie (10) incluant le commutateur (12) qui a été activé indiquent l'énergisation, l'unité de commande (14) est configurée pour déterminer qu'un état d'énergisation est normal dans la ligne d'alimentation (Lp),
lorsque la tension mesurée par l'unité de mesure de tension (13) dans l'un des blocs de stockage d'énergie (10) incluant le commutateur (12) qui a été activé indique une dé-énergisation et que la totalité d'une pluralité de tensions respectivement mesurées par une pluralité des unités de mesure de tension (13) dans tous les blocs de stockage d'énergie (10) autres que ledit un bloc de stockage d'énergie (10) incluant le commutateur (12) qui a été activé indiquent la dé-énergisation, l'unité de commande (14) est configurée pour déterminer qu'il existe une anomalie d'énergisation dans ledit un bloc de stockage d'énergie (10) incluant le commutateur (12) qui a été activé,
lorsque la tension mesurée par l'unité de mesure de tension (13) dans l'un des blocs de stockage d'énergie (10) incluant le commutateur (12) qui a été activé indique l'énergisation et que la totalité de la pluralité de tensions respectivement mesurées par la pluralité d'unités de mesure de tension (13) dans tous les blocs de stockage d'énergie (10) autres que ledit un bloc de stockage d'énergie (10) incluant le commutateur (12) qui a été activé indiquent la dé-énergisation, l'unité de commande (14) est configurée pour déterminer qu'il existe une connexion lâche entre ledit un bloc de stockage d'énergie (10) incluant le commutateur (12) qui a été activé et le chargeur (1a), et
lorsqu'une tension indiquant la dé-énergisation est incluse dans la pluralité de tensions respectivement mesurées par la pluralité d'unités de mesure de tension (13) dans tous les blocs de stockage d'énergie (10) autres que ledit un bloc de stockage d'énergie (10) incluant le commutateur (12) qui a été activé, l'unité de commande (14) est configurée pour déterminer qu'il existe une anomalie dans la ligne d'alimentation (Lp) pour un bloc de stockage d'énergie (10) dans lequel la tension indiquant la dé-énergisation a été mesurée.

2. Système selon la revendication 1, dans lequel
une interface utilisateur (6) est configurée pour fournir un message qui invite au remontage du bloc de stockage d'énergie (10) déterminé comme incluant l'anomalie dans la ligne d'alimentation (Lp).

3. Système selon la revendication 2, dans lequel
après que le bloc de stockage d'énergie (10) déterminé comme incluant l'anomalie dans la ligne d'alimentation (Lp) est remonté, le commutateur (12) dans ledit un bloc de stockage d'énergie (10) est activé.

4. Procédé de confirmation d'énergisation devant être exécuté sur une pluralité de blocs de stockage d'énergie (10), chacun étant électriquement connecté en parallèle par rapport à une charge (7), à des points de fusion respectifs vers une ligne d'alimentation (Lp), dans lequel chacun de la pluralité de blocs de stockage d'énergie (10) comprend :
un module de stockage d'énergie (11) ;
un commutateur (12) qui active et désactive l'énergisation entre le module de stockage d'énergie (11) et la charge (7) ;
une unité de mesure de tension (13) qui mesure une tension aux deux extrémités du commutateur (12) et du module de stockage d'énergie (11) connectés en série ; et
une unité de commande (14) qui obtient la tension mesurée par l'unité de mesure de tension (13) et est configurée pour commander le commutateur (12),
une pluralité d'unités de commande (14) respectivement incluses dans la pluralité de blocs de stockage d'énergie (10) sont connectées par une ligne de signal (Ls), et
le procédé de confirmation d'énergisation comprend :
activer le commutateur (12) dans un bloc de stockage d'énergie (10) lorsqu'une pluralité de commutateurs (12) respectivement inclus dans la pluralité de blocs de stockage d'énergie (10) sont désactivés, pour la mesure de tension respective dans chacun de la pluralité de blocs de stockage d'énergie (10) ;
lorsque la totalité d'une pluralité de tensions respectivement mesurées par une pluralité des unités de mesure de tension (13) dans la totalité de la pluralité de blocs de stockage d'énergie (10) incluant le commutateur (12) qui a été activé indiquent l'énergisation, l'unité de commande (14) déterminant qu'un état d'énergisation est normal dans une ligne d'alimentation (Lp) ; et
lorsque la tension mesurée par l'unité de mesure de tension (13) dans l'un des blocs de stockage d'énergie (10) incluant le commutateur (12) qui a été activé indique une dé-énergisation et que la totalité d'une pluralité de tensions respectivement mesurées par une pluralité des unités de mesure de tension (13) dans tous les blocs de stockage d'énergie (10) autres que ledit un bloc de stockage d'énergie (10) incluant le commutateur (12) qui a été activé indiquent la dé-énergisation, l'unité de commande (14) déterminant qu'il existe une anomalie d'énergisation dans ledit un bloc de stockage d'énergie (10) incluant le commutateur (12) qui a été activé ; et
lorsqu'une tension indiquant l'énergisation est mesurée par l'unité de mesure de tension (13) dans l'un des blocs de stockage d'énergie (10) incluant le commutateur (12) qui a été activé et qu'une tension indiquant la dé-énergisation est mesurée par l'unité de mesure de tension (13) dans un bloc de stockage d'énergie (10) autre que ledit un bloc de stockage d'énergie (10) incluant le commutateur (12) qui a été activé, l'unité de commande déterminant qu'il existe une anomalie dans une ligne d'alimentation (Lp) pour un bloc de stockage d'énergie (10) inclus dans la pluralité de blocs de stockage d'énergie (10) ; et
lorsqu'une tension indiquant la dé-énergisation est incluse dans la pluralité de tensions respectivement mesurées par la pluralité d'unités de mesure de tension (13) dans tous les blocs de stockage d'énergie (10) autres que ledit un bloc de stockage d'énergie (10) incluant le commutateur (12) qui a été activé, l'unité de commande (14) déterminant qu'il existe une anomalie dans la ligne d'alimentation (Lp) pour un bloc de stockage d'énergie (10) dans lequel la tension indiquant la dé-énergisation a été mesurée.
